# EUROPÄISCHE PATENTSCHRIFT

(11) **EP 0 648 347 B1**
(45) Veröffentlichungstag und Bekanntmachung des Hinweises auf die Patenterteilung: **17.09.1997**
(21) Anmeldenummer: 94913499.3
(22) Anmeldetag: 03.05.1994
(51) Int. Cl.: G03B 21/53, G03B 23/18, G02B 7/28

(54) **PROJEKTOR**
PROJECTOR
PROJECTEUR

(30) Priorität: 03.05.1993 DE 4314455
(43) Veröffentlichungstag der Anmeldung: 19.04.1995
(73) Patentinhaber: Rollei Fototechnic GmbH, 38126 Braunschweig (DE)
(72) Erfinder: HARTUNG, Hansjürgen, D-38302 Wolfenbüttel (DE); KÖNIG, Peter, D-38114 Braunschweig (DE)
(74) Vertreter: Gramm, Werner, Prof., Dipl.-Ing.
(86) Internationale Anmeldenummer: DE9400509
(87) Internationale Veröffentlichungsnummer: WO9425898

(56) Entgegenhaltungen:
- DE-A- 2 259 651
- DE-C- 3 517 376
- PATENT ABSTRACTS OF JAPAN vol. 6, no. 45 (M-118) 20. März 1982 & JP,A,56 160 214 (NTN TOKYO BEARING CO LTD) 9. Dezember 1981
- PATENT ABSTRACTS OF JAPAN vol. 6, no. 8 (P-98) 19. Januar 1982 & JP,A,56 135 834 (RICOH CO LTD) 23. Oktober 1981

## Beschreibung

Die Erfindung betrifft einen Projektor mit wenigstens einem Projektionsobjektiv, einem dem Projektionsobjektiv zugeordneten, aus einer Projektionsstellung in eine Dia-Wechselstellung durch einen Schlittenantrieb innerhalb des Projektors annähernd parallel zur optischen Achse des Projektionsobjektives verfahrbaren Schlitten, der eine Halterung für eine zu projizierende Bildvorlage aufweist, und mit einem Fokussierantrieb insbesondere mit einer Autofokuseinrichtung.

Solche Projektoren sind unter der Bezeichnung "Überblendprojektor" bekanntgeworden und haben trotz der aufwendigen Mechanik den besonderen Vorzug, daß mit solchen Projektoren eine Überblendprojektion mit Bildvorlagen aus einem gemeinsamen Magazin möglich ist, d.h., daß die zu projizierenden Vorlagen nicht entsprechend der Projektionsfolge auf verschiedene Magazine verteilt werden müssen.

Der eingangs beschriebene Projektor läßt sich der DE 22 59 651 B2 entnehmen. Es handelt sich um einen Doppel-Stehbildwerfer, bestehend aus zwei zu einem Gerät vereinigten Bildwerfern und einer Führung für ein gemeinsames Magazin, in dem die Dias in fortlaufender Folge eingeordnet sind und nach der Projektion wieder eingeordnet werden, wobei sich die aufeinanderfolgenden Dias zeitweise gleichzeitig in den Bildfenstern der beiden Projektoren befinden. Vorgesehen ist ein gemeinsamer Wechsel, der die Dias dem Magazin entnimmt und abwechselnd den in Wechselrichtung parallel hintereinander angeordneten Bildwerfern zu-und von diesen wieder zurückführt. Der Schlittenantrieb dient zur Axialbewegung der beiden Diabühnen und ist derart ausgebildet, daß diese beim Diawechsel aus der Projektionsstellung in die Wechselschieberebene verbracht werden, die außerhalb des Lichtstrahlengangs der projektionsbereiten Bildwerfer liegt. Die Arretierung der Projektionseinheiten in Projektionsstellung wird durch einen axial verschiebbaren Anschlag erreicht, der über getriebliche oder elektrische Verbindungselemente durch eine Autofokuseinrichtung in axialer Richtung verschiebbar ist. Die sich gerade in Projektionsstellung befindliche Diabühne liegt an dem genannten Anschlag an, der für die Scharfeinstellung des Dias verantwortlich ist. Dieser Anschlag arbeitet mit einer der üblichen Autofokuseinrichtungen so zusammen, daß das Dia in der Fokusebene zu liegen kommt. Dies bietet zwar den Vorteil, daß sich für die Scharfeinstellung eine zusätzliche zu einem Schraubgewinde axial angeordnete verschiebbare Lagerung des Objektivs erübrigt. Jedoch muß die Diabühne eines der Schlitten zur Lage der Diabühne des anderen Schlittens justiert werden, damit nicht während der Überblendung oder gleichzeitigen Projektion beider Bildvorlagen eine davon unscharf ist.

Im Zuge des vermehrten Einsatzes von Elektronik zur Steuerung solcher Projektoren anstelle von rein mechanischen Steuerungen ist man dazu übergegangen, die einzelnen Bewegungen von Elementen eines solchen Projektors durch eigene Motoren erfolgen zu lassen. Wie in der DE-PS 35 17 376 beschrieben ist, bietet dies u.a. den Vorzug, daß die Projektionsfolge der einzelnen Bildvorlagen unabhängig von deren Anordnung im Magazin erfolgen kann. Dabei ist man auch dazu übergegangen, die Fokussierung durch eine motorische Verstellung eines die Projektionsobjektive tragenden Objektivträgers durchzuführen.

Auch bei einer solchen Anordnung müssen die Diabühnen in Projektionsstellung der Schlitten auf gleichen Abstand zu den zugeordneten Projektionsobjektiven justiert werden, um Schärfeunterschiede bei gleichzeitiger Projektion beider Bildvorlagen zu vermeiden.

Der in der DE 35 17 376 beschriebene Aufbau führt dazu, daß eine Vielzahl von Motoren mit einer entsprechend umfangreichen Ansteuerung erforderlich ist.

Der Erfindung liegt daher die Aufgabe zugrunde, einen Projektor zu schaffen, der hinsichtlich seines Aufbaus gegenüber den bisher bekannten Projektoren vereinfacht ist.

Diese Aufgabe wird erfindungsgemäß gelöst durch einen Projektor der eingangs erwähnten Art, der gekennzeichnet ist durch nur einen einzigen Antrieb, der zugleich den Fokussierantrieb sowie den Schlittenantrieb bildet.

Die Erfindung ermöglicht einen kompakten und vereinfachten Aufbau eines solchen Projektors. Ein zur Fokussierung beweglicher Objektivträger ist nicht erforderlich, damit entfällt auch ein entsprechender Montageaufwand und eine hinsichtlich der Fertigung kritische Führung für den Objektivträger. Bei einem erfindungsgemäßen Projektor mit z.B. zwei Projektionsobjektiven ist auch keine Justage der Diabühnen zueinander erforderlich, da jeder Schlitten über seinen Antrieb fokussiert werden kann. Dadurch entfällt ein erheblicher Aufwand für Fertigung und Qualitätskontrolle, was zu deutlich verringerten Fertigungskosten führt.

Besonders zweckmäßig ist es, wenn der Schlittenantrieb ein Getriebe umfaßt, das ein in Abhängigkeit von dem Verfahrweg des Schlittens veränderliches Übersetzungsverhältnis aufweist.

Dadurch ist ein besonders einfacher Aufbau möglich, da einerseits ein schnelles Verfahren des Schlittens gewährleistet, andererseits eine genaue Positionierung der Diabühne in der Fokusebene möglich ist, ohne dafür spezielle Motoren einsetzen zu müssen.

Für einen bei Überblendprojektoren vorteilhaften erschütterungsarmen Betrieb ist es besonders zweckmäßig, wenn das Getriebe ein stufenlos veränderliches Übersetzungsverhältnis aufweist. Dadurch werden Erschütterungen durch einen oder mehrere Übersetzungssprünge, die zu einem Zittern der Projektionen führen können, weitgehend vermieden.

Für einen Betrieb bei ausgeschalteter Autofokuseinrichtung ist es besonders zweckmäßig, wenn der Schlittenantrieb eine Einrichtung zur Erfassung von relativen Positionsänderungen des Schlittens umfaßt, wobei diese Einrichtung vorzugsweise durch eine Zählscheibe gebildet wird.

Dadurch wird die Reproduktion einer einmal eingenommenen Projektionsstellung beim Verfahren des Schlittens besonders einfach möglich.

Ferner ist es sehr zweckmäßig, wenn die Zählscheibe ein entsprechend dem Übersetzungsverhältnis veränderliches Verhältnis von erfaßter Positionsänderung (Impulse) zur Verfahrstrecke des Schlittens (Empfindlichkeit) aufweist.

Dadurch ist unter Verwendung einfacher, bekannter Auswerteschaltungen eine besonders gute Reproduzierbarkeit der Schlittenlage in seiner Projektionsstellung bei ausgeschalteter Autofokuseinrichtung gewährleistet.

In einer bevorzugten Ausführungsform ist ein erfindungsgemäßer Projektor dadurch gekennzeichnet, daß der Schlittenantrieb einen Elektromotor mit einer Antriebsseilscheibe oder dergl. und ein Zugmittelgetriebe umfaßt, wobei der Elektromotor und eine Umlenkrolle des Zugmittelgetriebes ortsfest in dem Projektor angeordnet sind.

Eine solche Anordnung ermöglicht einen besonders preiswerten und kompakten Aufbau, da der Antriebsmotor durch die Verwendung des Zugmittelgetriebes an einer geeigneten Stelle positioniert werden kann und an die Genauigkeit der Einbaulage keine hohen Anforderungen gestellt werden.

Eine bevorzugte Ausführungsform ist zweckmäßigerweise ferner dadurch gekennzeichnet, daß das Zugmittelgetriebe ein um eine mit dem Schlitten fest verbundene Achse drehbares, von dem Zugmittel umschlungenes Fokusrad aufweist, das so an der Achse angebracht ist, daß eine Drehung des Fokusrades um die Achse so lange nicht erfolgt, bis sich der Schlitten in seiner Projektionsstellung befindet.

Dadurch ist eine zweckmäßige Aufteilung von Verfahrbetrieb und Fokussierbetrieb des Schlittenantriebs gewährleistet.

Dabei ist es besonders günstig, wenn das Fokusrad gegen die Kraft einer Rückholfeder drehbar ist, wenn sich der Schlitten in seiner Projektionsstellung befindet. Dadurch ist eine Drehung des Fokusrades um die Achse so lange wirksam unterbunden, bis sich der Schlitten in seiner Projektionsstellung befindet.

Für eine besonders einfache und betriebssichere Ausführung der Erfindung ist es zweckmäßig, wenn das Fokusrad als Seilscheibe ausgebildet ist.

In einer besonders zweckmäßigen Ausführungsform der Erfindung stützt sich das Fokusrad mit einem Steuerelement an einem ortsfest im Projektor angeordneten Anschlag ab, wenn sich der Schlitten in seiner Projektionsstellung befindet.

Dadurch kann einfach erreicht werden, daß durch die durch das Steuerelement in eine Wegänderung übertragene Drehung des Fokusrades ein gegenüber dem Verfahrweg zwischen Wechselstellung und Projektionsstellung geändertes Übersetzungsverhältnis realisiert wird.

Dazu ist es besonders zweckmäßig, wenn das Steuerelement eine Kurvenscheibe ist. Durch die Formgebung der Kurvenscheibe kann ein kontinuierlich veränderliches Übersetzungsverhältnis realisiert werden.

In praktischen Versuchen hat es sich als besonders günstig herausgestellt, wenn die Außenkontur der Kurvenscheibe im wesentlichen die Form einer archimedischen Spirale aufweist.

Dabei ist es vorteilhaft, wenn das Fokusrad die Kurvenscheibe ist. Dies hält die Anzahl der Bauteile und damit den Fertigungsaufwand gering.

Es kann jedoch auch zweckmäßig sein, daß die Kurvenscheibe axial an dem Fokusrad angeordnet ist. Dies ermöglichst die Verwendung von Standardteilen für die Seilscheibe und eine Anpassung der Form der Kurvenscheibe an die Einbaubedingungen.

Die Erfindung soll im folgenden anhand eines in den Figuren dargestellten Ausführungsbeispieles näher erläutert werden. Es zeigen:

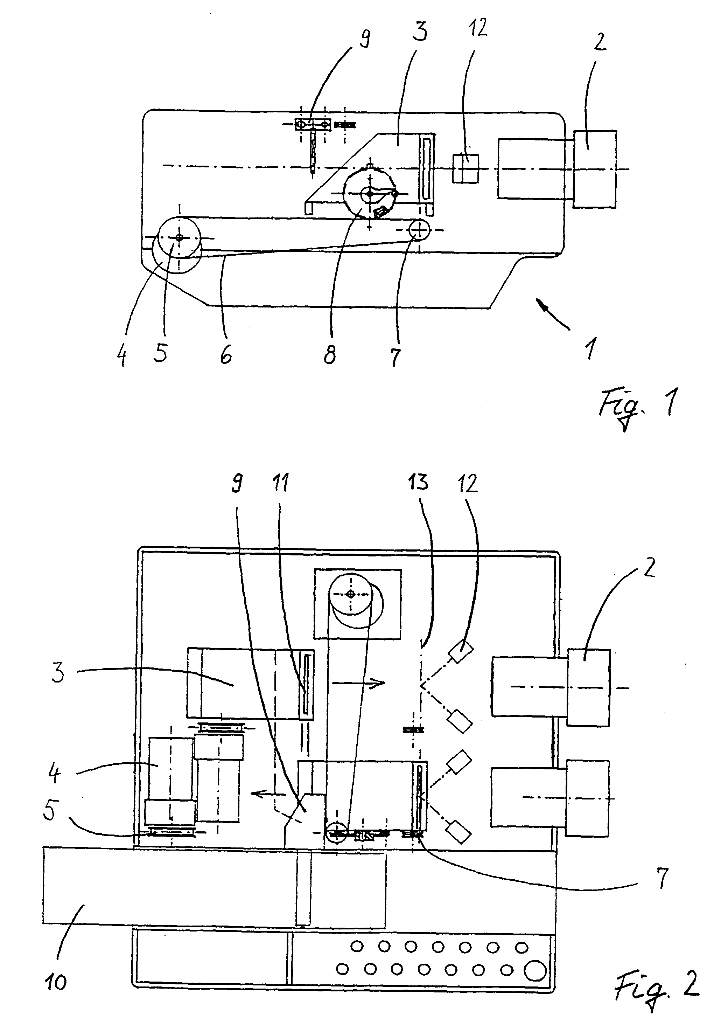

- **Figur 1**: einen schematisierten Längsschnitt durch einen erfindungsgemäßen Projektor,
- **Figur 2**: eine Draufsicht auf einen geöffneten erfindungsgemäßen Projektor in schematisierter Darstellung,
- **Figur 3**: eine Seitenansicht eines Schlittens und eines Schlittenantriebes eines erfindungsgemäßen Projektors, wobei sich der Schlitten in seiner Wechselstellung befindet,
- **Figur 4**: eine Darstellung wie in Figur 3, wobei sich der Schlitten jedoch in seiner Projektionsstellung befindet,
- **Figur 5**: eine Darstellung wie in Figur 4, wobei das Fokusrad zur Fokussierung verdreht ist.

In den Figuren ist ein als Überblendprojektor ausgebildeter Projektor 1 dargestellt, der zwei Projektionsobjektive 2 aufweist, die in üblicher Weise über ein Einstellgewinde in dem Projektor 1 angebracht sind.

In dem Projektor 1 sind ferner zwei Schlitten 3 angeordnet, die aus einer ersten Betriebsstellung (Projektionsstellung) in eine zweite Betriebsstellung (Wechselstellung) verfahrbar sind. Die Schlitten 3 werden in nicht näher dargestellten Gleitbahnen durch je einen Schlittenantrieb bewegt, der jeweils aus einem Elektromotor 4 mit einer Antriebsseilscheibe 5, einem Seilzug 6 und einer Umlenkrolle 7 besteht. Dabei sind der Elektromotor 4 mit der Antriebsseilscheibe 5 und die Umlenkrolle 7 ortsfest in dem Projektor 1 angeordnet. Der Seilzug 6 ist mit dem Schlitten 3 über ein von dem Seilzug 6 umschlungenes Fokusrad 8 verbunden.

Durch eine nicht dargestellte Steuereinrichtung ist gewährleistet, daß sich stets nur einer der Schlitten 3 in seiner Wechselstellung befindet. In dieser Stellung kann durch einen ebenfalls im Projektor 1 angeordneten Greifer 9 eine Bildvorlage (Dia) aus dem gemeinsamen Magazin 10 entnommen und in eine am Schlitten 3 angebrachte, als Diabühne 11 ausgebildete Halterung transportiert werden.

In dem Projektor 1 sind ferner zwei Autofokus-Sensoreinrichtungen 12 angeordnet, die über eine übliche Auswerte- und Steuerschaltung die Positionierung des Dias in der durch die gestrichelte Linie 13 dargestellten Fokusebene gewährleisten.

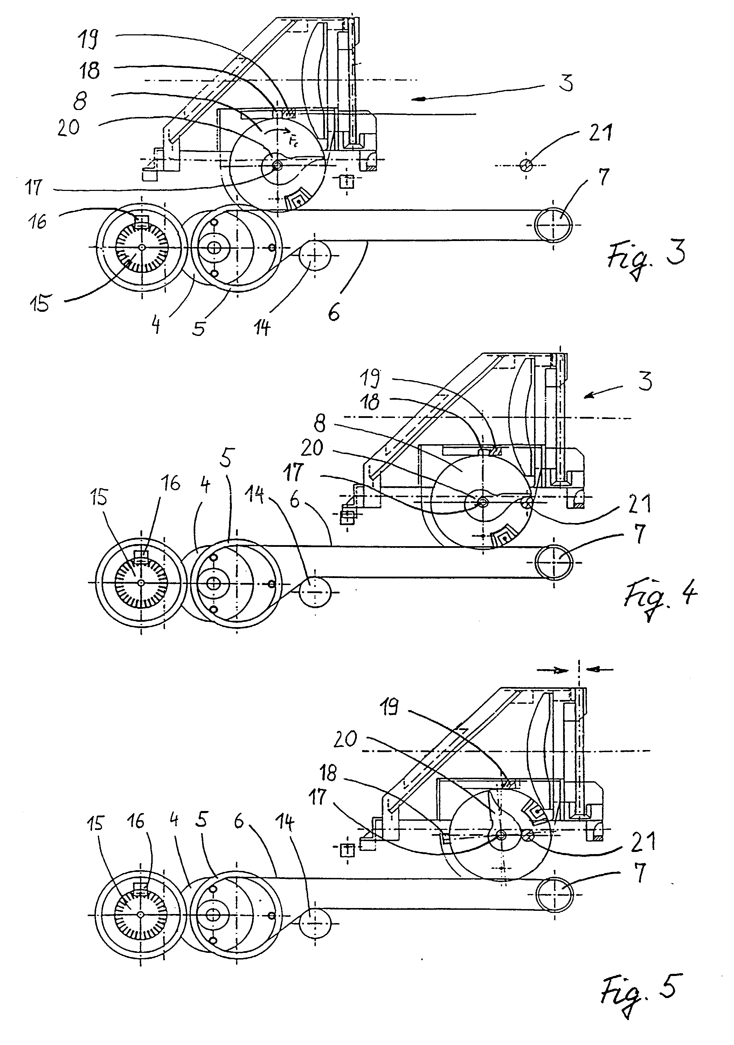

Aus der in Figur 3 dargestellten Wechselstellung wird der Schlitten 3 in die in Figur 4 dargestellte Projektionsstellung bewegt. Dazu läuft der Seilzug 6 außer über die Antriebsseilscheibe 5 und die Umlenkrolle 7 noch über eine Spannrolle 14.

Von dem Elektromotor 4 wird ferner die Zählscheibe 15 angetrieben, die eine übliche Inkrementalcodierung aufweist und über eine Lichtschranke 16 abgetastet wird. Dadurch wird ein der Umdrehungszahl des Elektromotors 4 proportionales Signal durch Auszählen der Impulse mit Hilfe einer üblichen Auswerteschaltung gewonnen.

Das von dem Seilzug 6 umschlungene Fokusrad 8 ist drehbar auf einer mit dem Schlitten 3 fest verbundenen Achse 17 gelagert. Dabei wird das Fokusrad 8 durch eine nicht dargestellte Drehfeder mit einem an dem Fokusrad 8 befindlichen Nocken 18 gegen einen Rastanschlag 19 an dem Schlitten 3 gedrückt. Dadurch ist gewährleistet, daß sich das Fokusrad 8 beim Verfahren aus der Wechsel- in die Projektionsstellung nicht unter dem Einfluß der Seilkraft verdreht. So wird eine hohe mögliche Verfahrgeschwindigkeit des Schlittens 3 sichergestellt.

Wenn der Schlitten 3 die in Figur 4 dargestellte Projektionsstellung erreicht hat, berührt eine axial fest an dem Fokusrad 8 angebrachte Kurvenscheibe 20 mit einem als Anlaufelement ausgebildeten Teil ihrer Außenkontur einen im Projektor 1 ortsfest angebrachten Anschlag 21.

Die auf den Schlitten 3 einwirkenden Vortriebskräfte bewirken eine Drehung des Fokusrades 8 gegen die Kraft der Drehfeder entgegen dem Uhrzeigersinn. Dabei hebt der Nocken 18 des Fokusrades 8 von dem Rastanschlag 19 ab (Figur 5).

Die Kurvenscheibe 20 stützt sich nunmehr mit einem gegensinnig zu dem Anlaufelement gekrümmten, die Form einer archimedischen Spirale mit abnehmendem Radius aufweisenden Teil ihrer Außenkontur an dem Anschlag 21 ab.

Bei weiterem Zug durch den Seilzug 6 verdreht sich das Fokusrad 8 mit seiner Kurvenscheibe 20 weiter, bis sich ein Gleichgewicht zwischen der durch den Seilzug 6 übertragenen Vortriebskraft und der Rückstellkraft der Drehfeder eingestellt hat.

Mit zunehmender Verdrehung des Fokusrades 8 bewegt sich der Schlitten 3 und damit die Diabühne 11 auf das Projektionsobjektiv 2 zu. Dabei verändert sich das Übersetzungsverhältnis so, daß der Verfahrweg des Schlittens 3 im Verhältnis zum Weg des Seilzuges 6 entsprechend der Radiusänderung der Außenkontur der Kurvenscheibe 20 geringer wird.

Wird die durch den Seilzug 6 übertragene Kraft geringer als die Rückstellkraft der Drehfeder, bewegt sich der Schlitten 3 entsprechend zurück. Wird als Elektromotor 4 ein Gleichstrommotor verwendet, kann die durch den Seilzug 6 übertragene Kraft durch eine relativ einfache Stromansteuerung erfolgen. Bei Autofokusbetrieb erfolgt die Stromansteuerung durch die Auswerte- und Steuerschaltung der Autofokus-Sensoreinrichtung 12.

Bei abgeschalteter Autofokuseinrichtung erfolgt die Ansteuerung des Elektromotors über die Auswerteschaltung der Lichtschranke 16.

Dabei erfolgt die Reproduktion des Abstandes zwischen Diabühne 11 und Projektionsobjektiv 2 bei einem Diawechsel so, daß die durch die Drehung der mit dem Elektromotor 4 und der Antriebsseilscheibe 5 gekoppelten Zählscheibe 15 in der Lichtschranke 16 bei dem Verfahren des Schlittens 3 aus der Projektionsstellung in die Wechselstellung erzeugten Impulse durch die Auswerteschaltung erfaßt werden.

Bei dem anschließenden Verfahren des Schlittens 3 aus der Wechselstellung in die Projektionsstellung wird der Elektromotor 4 durch die Auswerteschaltung so angesteuert, daß durch die dabei erfolgende Drehung der Zählscheibe 15 gleich viele Impulse in der Lichtschranke 16 erzeugt werden, wie bei dem vorherigen Verfahren des Schlittens 3 aus der Projektions- in die Wechselstellung.

Da sich auch die Empfindlichkeit der Zählung, das heißt, die Zahl der im Verhältnis zum vom Schlitten 3 zurückgelegten Weg erzeugten Impulse, entsprechend der Übersetzungsänderung erhöht, sobald sich die Kurvenscheibe 20 an dem Anschlag 21 abstützt, ist eine sehr gute Reproduktion des vorhergehenden Abstandes zwischen Diabühne 11 und Projektionsobjektiv 2 gewährleistet.

## Patentansprüche

1. Projektor (1) mit wenigstens einem Projektionsobjektiv (2), einem dem Projektionsobjektiv (2) zugeordneten, aus einer Projektionsstellung in eine Dia-Wechselstellung durch einen Schlittenantrieb (4, 5, 6, 7) innerhalb des Projektors (1) annähernd parallel zur optischen Achse des Projektionsobjektives (2) verfahrbaren Schlitten (3), der eine Halterung (11) für eine zu projizierende Bildvorlage aufweist, und mit einem Fokussierantrieb insbesondere mit einer Autofokuseinrichtung (12), **gekennzeichnet durch** nur einen einzigen Antrieb, der zugleich den Fokussierantrieb sowie den Schlittenantrieb (4, 5, 6, 7) bildet.

2. Projektor (1) nach Anspruch 1, **dadurch gekennzeichnet**, daß der Schlittenantrieb (4, 5, 6, 7) ein Getriebe umfaßt, das ein in Abhängigkeit von dem Verfahrweg des Schlittens (3) veränderliches Übersetzungsverhältnis aufweist.

3. Projektor (1) nach Anspruch 2, **dadurch gekennzeichnet,** daß das Getriebe (8, 20, 21) ein stufenlos veränderliches Übersetzungsverhältnis aufweist.

4. Projektor (1) nach Anspruch 2 oder 3, **dadurch gekennzeichnet**, daß der Schlittenantrieb (4, 5, 6, 7) ferner eine Einrichtung zur Erfassung von relativen Positionsänderungen des Schlittens (3) umfaßt.

5. Projektor (1) nach Anspruch 4, **dadurch gekennzeichnet**, daß die Einrichtung eine Zählscheibe (15) umfaßt, die ein entsprechend dem Übersetzungsverhältnis veränderliches Verhältnis von erfaßter Positionsänderung zur Verfahrstrecke des Schlittens (3) aufweist.

6. Projektor (1) nach einem der vorhergehenden Ansprüche, **dadurch gekennzeichnet**, daß der Schlittenantrieb einen Elektromotor (4) mit einer Antriebsseilscheibe (5) oder dergl. und ein Zugmittelgetriebe umfaßt, wobei der Elektromotor (4) und eine Umlenkrolle (7) des Zugmittelgetriebes ortsfest in dem Projektor (1) angeordnet sind.

7. Projektor (1) nach Anspruch 6, **dadurch gekennzeichnet**, daß das Zugmittelgetriebe ferner ein um eine mit dem Schlitten (3) fest verbundene Achse (17) drehbares, von dem Zugmittel umschlungenes Fokusrad (8) aufweist, das so an der Achse (17) angebracht ist, daß eine Drehung des Fokusrades (8) um die Achse (17) solange nicht erfolgt, bis sich der Schlitten (3) in seiner Projektionsstellung befindet.

8. Projektor (1) nach Anspruch 7, **dadurch gekennzeichnet**, daß das Fokusrad (8) gegen die Kraft einer Rückholfeder drehbar ist, wenn sich der Schlitten (3) in seiner Projektionsstellung befindet.

9. Projektor (1) nach Anspruch 7 oder 8, **dadurch gekennzeichnet**, daß das Fokusrad (8) als Seilscheibe ausgebildet ist.

10. Projektor (1) nach einem der Ansprüche 7 bis 9, **dadurch gekennzeichnet**, daß sich das Fokusrad (8) mit einem Steuerelement (20) an einem ortsfest in dem Projektor (1) angeordnetem Anschlag (21) abstützt, wenn sich der Schlitten (3) in seiner Projektionsstellung befindet.

11. Projektor (1) nach Anspruch 10, **dadurch gekennzeichnet,** daß das Steuerelement eine Kurvenscheibe (20) ist.

12. Projektor (1) nach Anspruch 11, **dadurch gekennzeichnet**, daß die Außenkontur der Kurvenscheibe (20) im wesentlichen die Form einer archimedischen Spirale aufweist.

13. Projektor (1) nach Anspruch 11 oder 12, **dadurch gekennzeichnet**, daß das Fokusrad (8) die Kurvenscheibe (20) ist.

14. Projektor (1) nach Anspruch 11 oder 12, **dadurch gekennzeichnet**, daß die Kurvenscheibe (20) axial an dem Fokusrad (8) angeordnet ist.

## Claims

1. Projector (1) with at least one projection lens (2), with a carriage (3) which is associated with the projection lens (2), can be caused to travel inside the projector, approximately parallel to the optical axis of the projection lens (2), out of a projection position and into a slide-changing position by a carriage drive (4, 5, 6, 7), and has a mounting (11) for an image pattern to be projected; and with a focusing drive, particularly with an autofocus arrangement (12), **characterised by** only one single drive which simultaneously forms the focusing drive and also the carriage drive (4, 5, 6, 7).

2. Projector (1) according to claim 1, **characterised in that** the carriage drive (4, 5, 6, 7) comprises a gear unit which has a transmission ratio that is variable in dependence upon the path of travel of the carriage (3).

3. Projector (1) according to claim 2, **characterised in that** the gear unit (8, 20, 21) has an infinitely variable transmission ratio.

4. Projector (1) according to claim 2 or 3, **characterised in that** the carriage drive (4, 5, 6, 7) also comprises an arrangement for detecting relative changes in position of the carriage (3).

5. Projector (1) according to claim 4, **characterised in that** the arrangement comprises a counting dial (15) that has a ratio, between the change in position detected and the extent of travel of the carriage (3), that is variable in a manner corresponding to the transmission ratio.

6. Projector (1) according to one of the preceding claims, **characterised in that** the carriage drive comprises an electric motor (4) with a drive cord pulley (5) or the like and a traction means gear unit, the electric motor (4) and a deflecting roller (7) of the traction means gear unit being disposed in a stationary manner in the projector (1).

7. Projector (1) according to claim 6, **characterised in that** the traction means gear unit also has a focus wheel (8) which can be rotated about a spindle (17) fixedly connected to the carriage (3), is wrapped around by the traction means and is fitted to the spindle (17) in such a way that rotation of the focus wheel (8) about the spindle (17) does not take place until the carriage (3) is located in its projection position.

8. Projector (1) according to claim 7, **characterised in that** the focus wheel (8) can be rotated against the force of a restoring spring when the carriage (3) is located in its projection position.

9. Projector (1) according to claim 7 or 8, **characterised in that** the focus wheel (8) is constructed as a cord pulley.

10. Projector (1) according to one of claims 7 to 9, **characterised in that**, when the carriage (3) is located in its projection position, the focus wheel (8) is supported with the aid of a control element (20) on a stop (21) disposed in a stationary manner in the projector (i).

11. Projector (1) according to claim 10, **characterised in that** the control element is a cam disc (20).

12. Projector (1) according to claim 11, **characterised in that** the outer contour of the cam disc (20) essentially has the shape of an Archimedes' spiral.

13. Projector (1) according to claim 11 or 12,
**characterised in that** the focus wheel (8) is the cam disc (20).

14. Projector (1) according to claim 11 or 12,
**characterised in that** the cam disc (20) is disposed axially on the focus wheel (8).

## Revendications

1. Projecteur (1) comportant au moins un objectif de projection (2), un chariot (3) associé à l'objectif de projection (2) et déplaçable par un entraînement de chariot (4, 5, 6, 7) à l'intérieur du projecteur (1) approximativement parallèlement à l'axe optique de l'objectif de projection (2) d'une position de projection dans une position de changement de diapositive, le chariot présentant un support (11) pour une image à projeter, le projecteur comprenant en outre un entraînement de mise au point en particulier un dispositif de mise au point automatique (12), caractérisé en ce qu'il n'y a qu'un seul entraînement qui constitue en même temps l'entraînement de mise au point ainsi que l'entraînement de chariot (4, 5, 6, 7).

2. Projecteur (1) selon la revendication 1, caractérisé en ce que l'entraînement de chariot (4, 5, 6, 7) comprend une transmission, qui présente un rapport de transmission variable en fonction du trajet de déplacement du chariot (3).

3. Projecteur (1) selon la revendication 2, caractérisé en ce que la transmission (8, 20, 21) présente un rapport de transmission variable de façon continue.

4. Projecteur (1) selon la revendication 2 ou 3, caractérisé en ce que l'entraînement de chariot (4, 5, 6, 7) comprend en outre un moyen pour capter des variations de position relatives du chariot (3).

5. Projecteur (1) selon la revendication 4, caractérisé en ce que le moyen comprend un disque de comptage (15) qui présente entre la variation de position captée et la distance de déplacement du chariot (3) un rapport qui est variable en correspondance avec le rapport de transmission.

6. Projecteur (1) selon l'une des revendications précédentes, caractérisé en ce que l'entraînement de chariot comprend un moteur électrique (4) avec une poulie de câble d'entraînement (5) ou analogue et une transmission à moyen de traction, le moteur électrique (4) et un galet de renvoi (7) de la transmission à moyen de traction étant disposés fixes dans le projecteur (1).

7. Projecteur (1) selon la revendication 6, caractérisé en ce que la transmission à moyen de traction présente en outre une roue de mise au point (8) entourée par le moyen de traction et rotative autour d'un axe (17) relié fixement avec le chariot (3) et sur lequel la roue de mise au point (8) est ainsi montée qu'une rotation de la roue de mise au point (8) autour de l'axe (17) ne se produit pas avant que le chariot (3) se trouve dans sa position de projection.

8. Projecteur (1) selon la revendication 7, caractérisé en ce que la roue de mise au point (8) est rotative à l'encontre de la force d'un ressort de rappel lorsque le chariot (3) se trouve dans sa position de projection.

9. Projecteur (1) selon la revendication 7 ou 8, caractérisé en ce que la roue de mise au point (8) est réalisée sous la forme d'une poulie de câble.

10. Projecteur (1) selon l'une des revendications 7 à 9, caractérisé en ce que la roue de mise au point (8) s'appuie par un élément de commande (20) contre une butée (21) disposée fixe dans le projecteur (1), lorsque le chariot (3) se trouve dans sa position de projection.

11. Projecteur (1) selon la revendication 10, caractérisé en ce que l'élément de commande est un disque à profil courbe (20).

12. Projecteur (1) selon la revendication 11, caractérisé en ce que le contour extérieur du disque à profil courbe (20) présente sensiblement la forme d'une spirale d'Archimède.

13. Projecteur (1) selon la revendication 11 ou 12, caractérisé en ce que la roue de mise au point (8) est le disque à profil courbe (20).

14. Projecteur (1) selon la revendication 11 ou 12, caractérisé en ce que le disque à profil courbe (20) est disposé axialement à côté de la roue de mise au point (8).
